# EUROPÄISCHE PATENTSCHRIFT

(11) **EP 3 327 204 B1**
(45) Veröffentlichungstag und Bekanntmachung des Hinweises auf die Patenterteilung: **11.09.2019**
(21) Anmeldenummer: 17201492.0
(22) Anmeldetag: 14.11.2017
(51) Int. Cl.: E02F 5/10, H02G 1/06

(54) **VERLEGEVORRICHTUNG ZUR ERDVERLEGUNG FLEXIBLER STRANGMATERIALIEN**
RELOCATION DEVICE FOR LAYING FLEXIBLE STRAND MATERIAL IN THE GROUND
DISPOSITIF DE POSE PERMETTANT LA POSE EN TERRE DE MATÉRIAUX EN FILS FLEXIBLES

(30) Priorität: 28.11.2016 DE 202016106622 U
(43) Veröffentlichungstag der Anmeldung: 30.05.2018
(73) Patentinhaber: Föckersperger, Walter, 84189 Pauluszell/Ndb. (DE)
(72) Erfinder: Föckersperger, Walter, 84189 Pauluszell/Ndb. (DE)
(74) Vertreter: Winter, Brandl, Fürniss, Hübner, Röss, Kaiser, Polte - Partnerschaft mbB

(56) Entgegenhaltungen:
- EP-A1- 2 256 255
- EP-A2- 0 355 278
- DE-A1- 10 115 456
- US-A- 3 849 999

## Beschreibung

Die Erfindung betrifft eine Verlegevorrichtung zur Erdverlegung flexibler Strangmaterialien, z.B. von Stromkabeln, Blitzschutzkabeln, Warnbänder, Abdeckbänder, Rohren, oder dergleichen.

Eine derartige, im Stand der Technik oder in der Literatur häufig auch als Kabelpflug, Kabelverlegepflug, Verlegepflug oder dergleichen bezeichnete Verlegevorrichtung wird beispielsweise aus der DE 10115456 B4 bekannt. Die vorgeschlagene Verlegevorrichtung weist ein sich in Vertikalrichtung der Verlegevorrichtung erstreckendes Schwert zum Ausbilden eines sich im Wesentlichen vertikal in das Erdreich erstreckenden Verlegeschlitzes und eine dem Schwert in Längsrichtung der Verlegevorrichtung nachlaufende, geschleppte Einführung auf, über die mehrere flexible Strangmaterialien in den Verlegeschlitz verlegt werden können. Die Einführung ist als ein Hohlgehäuse ausgebildet, das die zu verlegenden Strangmaterialien in voneinander getrennten, bogenförmig verlaufenden Führungsschächten jeweils von einer am Kopfende der Einführung liegenden Eintrittsöffnung zu einer am Fußende der Einführung liegenden Austrittsöffnung führt. Die Führungsschächte verlaufen von den Eintrittsöffnungen bis zu den Austrittsöffnungen parallel nebeneinander. In Schlepprichtung gesehen, liegen die Eintrittsöffnungen daher hintereinander, während die Austrittsöffnungen vertikal übereinander liegen. Mehrere Strangmaterialien werden daher vertikal übereinander in den Verlegeschlitz eingeführt und abgelegt.

In der EP 0355278 B1 ist eine Vorrichtung gezeigt und beschrieben, mit der mehrere Kabel gebündelt verlegt werden.

Je nach Art der zu verlegenden Strangmaterialien, z.B. bei Stromkabeln oder dergleichen, sind zwischen den Strangmaterialien, beispielsweise gesetzlich, vorgeschriebene Mindestabstände einzuhalten. Werden mehrere Strangmaterialien, wie in dem oben diskutierten Beispiel, vertikal übereinander verlegt, wird für die Verlegung der Strangmaterialien jedoch viel Platz in vertikaler Richtung benötigt, der bei den typischen Verlegetiefen von ca. 2,5 m oftmals nicht zur Verfügung steht.

Die EP 2256255 A1 zeigt und beschreibt eine Verlegevorrichtung zum gleichzeitigen Verlegen von mindestens zwei im Wesentlichen parallelen und axial beabstandeten Gruppen biegsamer Medienleitungen in mindestens einer flächigen Lage im Erdreich, wobei jede Gruppe biegsamer Medienleitungen mindestens eine biegsame Medienleitung aufweist. Die Verlegevorrichtung weist eine Schneidvorrichtung zur Erzeugung mindestens eines Schlitzes im Boden auf, wobei die Schneidvorrichtung mindestens ein oder mehrere im Wesentlichen vertikal angeordnete sowie in Quer- und/oder Längsrichtung gestaffelte Schwerter aufweist, an deren unterem Ende ein im Wesentlichen horizontal ausgerichtetes Schwert angeordnet ist, das mindestens zwei Vorrichtungen für das Ausbringen der Gruppen von Medienleitungen an der, der Schneidrichtung entgegengerichteten Seite aufweist. Auf den Aufbau der Schneidvorrichtung der in der EP 2256255 A1 vorgeschlagenen Verlegevorrichtung wird zwar nicht näher eingegangen. Aufgrund der zeichnerischen Darstellung ist aber davon auszugehen, dass es sich bei den durch Schneidvorrichtung hindurch geführten Medienleitungen nur um relativ biegsame Medienleitungen mit kleinem Durchmesser handeln kann, weil die Medienleitungen auf dem Weg durch die Schneidvorrichtung hindurch eine mehrfache Krümmung und Umlenkung erfahren. Die in der EP 2256255 A1 vorgeschlagene Schneidvorrichtung Verlegevorrichtung eignet sich daher strukturell bedingt beispielsweise nicht zur Erdverlegung von Hochspannungsleitungen mit Durchmessern von beispielsweise 125 mm und minimal zulässigen Biegeradien im Bereich des 20- bis 25-fachen des Durchmessers oder Kunststoffrohren mit Durchmessern von beispielsweise 315 mm und minimal zulässigen Biegeradien im Bereich des 20- fachen des Durchmessers.

Ausgehend von einer Verlegevorrichtung, wie sie beispielsweise aus der DE 10115456 B4 bekannt ist, liegt der Erfindung die Aufgabe zugrunde, eine Verlegevorrichtung zur Erdverlegung mehrerer flexibler Strangmaterialien bereitzustellen, die in vorgeschriebenen Mindestabständen zu verlegen sind und die, wie die oben erwähnten Hochspannungsleitungen oder Kunststoffrohre, relativ große minimal zulässige Biegeradien erfordern.

Diese Aufgabe wird durch eine Verlegevorrichtung mit den Merkmalen des unabhängigen Anspruchs 1 gelöst. Vorteilhafte Weiterbildungen sind Gegenstand abhängiger Ansprüche.

Eine erfindungsgemäße Verlegevorrichtung zur Erdverlegung flexibler Strangmaterialien weist eine sich in Höhen- oder Vertikalrichtung der Verlegevorrichtung erstreckende Verlegeschlitzausbildungseinrichtung zum Ausbilden eines Verlegeschlitzes im Erdreich, und eine der Verlegeschlitzausbildungseinrichtung in Längs- oder Schlepprichtung der Verlegevorrichtung nachlaufende Einführung zum Einführen mehrerer flexibler Strangmaterialien, beispielsweise Kunststoffrohren, Stromkabeln, etc., in den Verlegeschlitz auf.

Richtungsangaben wie die vorgenannte "Höhen- oder Vertikalrichtung" oder im Folgenden verwendeten Bezeichnungen "vertikal", "horizontal", "auf- und abwärts", "seitlich" oder dergleichen beziehen sich auf einen Zustand, in dem sich die Verlegevorrichtung in ihrer Arbeitsstellung befindet. In der Arbeitsstellung deckt sich die "Vertikalrichtung" oder "Höhenrichtung" der Verlegevorrichtung daher mit der Vertikalen auf die Erdoberfläche bzw. mit der Lotrichtung. Die "Längsrichtung" der Verlegevorrichtung stimmt mit der Schlepprichtung der Verlegevorrichtung überein.

Die Verlegeschlitzausbildungseinrichtung kann im einfachsten Fall aus einem Schwert gebildet sein. Sie kann aber neben dem Schwert des Weiteren, beispielsweise nach dem Vorbild der Verdrängervorrichtung der aus der DE 10115456 B4 bekannten Verlegevorrichtung, ein vom Schwert geschlepptes Verdrängersegment aufweisen.

Die Einführung weist ein Hohlgehäuse auf, das zur Führung der Strangmaterialien mehrere Führungsschächte, vorzugsweise eine der Zahl der zu verlegenden Strangmaterialien entsprechende Zahl von Führungsschächten, aufweist, die jeweils zwischen einer zugeordneten Eintrittsöffnung am Kopfende der Einführung und einer zugeordneten Austrittsöffnung am Fußende der Einführung voneinander getrennt bogenförmig verlaufen. In einer bevorzugten Ausführungsform sollen gleichzeitig drei Strangmaterialien, im Besonderen Hochspannungsstromkabel, beispielsweise 150 kV-Kabel, verlegt werden, so dass die Einführung folglich drei Führungsschächte aufweist. Unabhängig von der Zahl der Führungsschächte sind diese voneinander getrennt ausgebildet, so dass jeder Führungsschacht genau ein Strangmaterial von einer zugeordneten Eintrittsöffnung im Kopfbereich (in Schlepprichtung vorne oben) der Einführung bis zu der Austrittsöffnung im Fußbereich (in Schlepprichtung hinten unten) der Einführung führen kann.

Erfindungsgemäß soll das Hohlgehäuse des Weiteren, in Schlepprichtung der Verlegevorrichtung gesehen, im Wesentlichen umgekehrt T-förmig dergestalt ausgebildet sein, dass die Austrittsöffnungen der Führungsschächte in definierten Mindestabständen horizontal nebeneinander angeordnet sind. In Schlepprichtung gesehen, ähnelt die Form der Verlegevorrichtung daher im Wesentlichen der Form eines Normalleitwerks am Heck eines Flugzeugs.

Die durch die Austrittsöffnungen austretenden Strangmaterialien können somit horizontal nebeneinander verlegt werden. In der oben erwähnten Ausführungsform, bei der drei Strangmaterialien horizontal nebeneinander verlegt werden sollen, betragen die vorgeschriebenen Mindestabstände beispielsweise bis zu 0,9 m zwischen zwei nebeneinanderliegenden Strangmaterialien, wobei eine erste der drei Austrittsöffnungen, in Schlepprichtung gesehen, links, eine zweite der drei Austrittsöffnungen mittig und eine dritte der drei Austrittsöffnungen rechts angeordnet ist.

Die horizontal beabstandete Anordnung der Austrittsöffnungen gewährleistet die Einhaltung eines vorgeschriebenen Mindestabstands zwischen unmittelbar nebeneinanderliegenden Strangmaterialien. Die umgekehrte T-Form der Einführung gestattet, dass die Strangmaterialien in bekannter Weise beispielsweise über Eintrittsöffnungen, die, in Schlepprichtung der Verlegevorrichtung gesehen, hintereinander angeordnet sind, in die Führungsschächte eintreten und in der Einführung auf dem Weg zu den Austrittsöffnungen in eine horizontale Lage umgelenkt werden. Der bogenförmige Verlauf der Führungsschächte gewährleistet die Einhaltung vorgeschriebener minimaler Biegeradien, beispielsweise des oben erwähnten 20- bis 25-fachen des Durchmessers der zu verlegenden Strangmaterialien, beispielsweise von Hochspannungsleitungen mit Durchmessern von beispielsweise 125 mm und minimal zulässigen Biegeradien im Bereich des 20- bis 25-fachen des Durchmessers oder Kunststoffrohren mit Durchmessern von beispielsweise 315 mm und minimal zulässigen Biegeradien im Bereich des 20- fachen des Durchmessers.

Die umgekehrte T-Form lässt sich relativ einfach durch eine Gestaltung realisieren, bei der das Hohlgehäuse einen sich in Vertikalrichtung der Verlegevorrichtung erstreckenden Rumpf aufweist, an dessen Fußende sich beidseits des Rumpfs seitlich auskragende Flossen anschließen. In diesem Fall bildet der Rumpf einen zentralen Abschnitt der Einführung, durch den sich die Führungsschächte zunächst vertikal und, in Schlepprichtung gesehen, hintereinander erstrecken und der der Einführung die erforderliche Stabilität gibt. Die beiden seitlich auskragenden Flossen am Fußende des Rumpfs ermöglichen eine Umlenkung derjenigen der Führungsschächte, die, in Schlepprichtung gesehen, seitlich des Rumpfs liegenden Austrittsöffnungen führen, aus der vertikalen Erstreckungsrichtung im Bereich des Rumpfs in eine horizontale Erstreckungsrichtung und eine horizontale Anordnung der Austrittsöffnungen. In der oben erwähnten Ausführungsform, bei der drei Strangmaterialien horizontal nebeneinander verlegt werden sollen, sind die erste und dritte der drei Austrittsöffnungen jeweils im Bereich einer der beiden Flossen angeordnet, während die zweite der drei Austrittsöffnungen im Bereich des Rumpfs angeordnet ist.

Die Austrittsöffnung sind, in Schlepprichtung gesehen, vorteilhaft wenigstens im Wesentlichen symmetrisch bezüglich einer Längsmittelebene des Hohlgehäuses der Einführung angeordnet und zwar unabhängig davon, ob die Zahl der Austrittöffnungen ungerade, wie bei der oben erwähnten Ausführungsform mit drei Austrittsöffnungen, oder gerade ist.

Des Weiteren schneiden die Flossen horizontal in das Erdreich, während der Rumpf des Schwerts im Wesentlichen vertikal in das Erdreich schneidet. Bei großen Abständen zwischen zwei nebeneinanderliegenden Strangmaterialien, z.B. den oben erwähnten 0,9 m, kann der erforderliche horizontale Verlegeschlitz, in dem die Strangmaterialien zu verlegen sind, nicht mehr ausschließlich durch eine seitliche Verdrängung des an den durch das Schwert erzeugten vertikalen Verlegeschlitz angrenzenden Erdreichs erzeugt werden. Daher sind die Flossen erfindungsgemäß so ausgebildet, dass sie horizontal in das Erdreich schneiden. Durch das beim Schleppen der Verlegevorrichtung an den Flossen vorbeistreichende Erdreich erfährt die Einführung eine nach unten gerichtete Reaktionskraft, die dazu beiträgt, die Einführung in der Tiefe der Arbeitsstellung zu halten.

Insgesamt kann durch das Schwert und die Einführung ein, in Schlepprichtung der Verlegevorrichtung bzw. in Längenerstreckungsrichtung des Verlegeschlitzes gesehen, umgekehrt T-förmiger Verlegeschlitz erzeugt werden.

In einer Draufsicht gesehen, verjüngen sich die Flossen in Schlepprichtung. In einer bevorzugten Weiterbildung weisen die Flossen jeweils eine Vielzahl von voneinander getrennten Flossenelementen aufweisen, die in einer Draufsicht gesehen, treppenförmig gestaffelt angeordnet sind. Diese Gestaltung bietet die Möglichkeit, die Flossenelemente beispielsweise austauschbar an den Vorderseiten der Flossen anzubringen, um sie beispielsweise im Verschleißfall austauschen zu können. Diesbezüglich hat jedes Flossenelement vorteilhaft eine, in einer Seitenansicht der Verlegevorrichtung gesehen, spitz nach vorne unten zulaufende Schneide.

Des Weiteren ist die Einführung relativ zur Verlegeschlitzausbildungseinrichtung bzw. zum Schwert in Vertikalrichtung der Verlegevorrichtung vorzugsweise so angeordnet, dass eine Fußsohle der Einführung auf gleicher Höhe wie eine Fußsohle des Schwerts läuft. Die Fußsohle der Einführung kann auf der durch das Schwert, beispielsweise eines am Schwert gehaltenen Schwertschuhs, erzeugten Sohle des Verlegeschlitzes laufen, wodurch die Sohle des Verlegeschlitzes geglättet wird und die aus den Austrittsöffnungen austretenden Strangmaterialien im Wesentlichen ohne merkliche Höhenunterschiede auf der Sohle des Verlegeschlitzes abgelegt werden können. Die Fußsohlen bilden daher Gleit- oder Streichflächen zur Glättung der Sohle des Verlegeschlitzes.

Im Hinblick auf die bevorzugte Anwendung der erfindungsgemäßen Verlegevorrichtung zur Erdverlegung von einen relativ großen Durchmesser aufweisenden Strangmaterialien kann die Läng der Verlegevorrichtung leicht bis zu ca. 10 m betragen. Dem Rechnung tragend ist die Verlegevorrichtung vorteilhaft mehrgliedrig bzw. mehrgelenkig ausgeführt. Im Besonderen kann die die Einführung relativ zur Verlegeschlitzausbildungseinrichtung bzw. zum Schwert seitlich, d.h. um eine im Wesentlichen vertikale Schwenkachse, schwenkbar und/oder auf- und abwärts, d.h. um eine im Wesentlichen horizontale Schwenkachse, schwenkbar ausgebildet sein. Durch diese Gestaltung wird gegenüber einer starren Bauweise wie beispielsweise bei der in der EP 2256255 A1 angegebenen Verlegevorrichtung die Beweglichkeit der erfindungsgemäßen Verlegevorrichtung erhöht. Diese Beweglichkeit kann dazu beitragen, dass im laufenden Betrieb die Einführung der Bewegung des Schwerts gut folgen und sich die Verlegevorrichtung automatisch an Bodenoberflächenkrümmungen anpassen kann, so dass das aus der ersten Einführung austretende Strangmaterial im Wesentlichen unmittelbar auf Höhe der Sohle des Verlegeschlitzes abgelegt werden kann.

Des Weiteren ist in einer vorteilhaften Weiterbildung der erfindungsgemäßen Verlegevorrichtung, beispielsweise nach dem Vorbild der Verdrängervorrichtung in der DE 10115456 B4 angegebenen Verlegevorrichtung, in Schlepprichtung zwischen dem Schwert und der Einführung ein Verdrängersegment zum Verbreitern des durch das Schwert erzeugten vertikalen Verlegeschlitzes zumindest auf die Breite der nachfolgenden Einführung angeordnet. Zur Erhöhung der Beweglichkeit kann das Verdrängersegment seitlich schwenkbar am Schwert angelenkt sein. In diesem Fall wird die Einführung von dem Schwert (über das Verdrängersegment und einen nachfolgend erwähnten Einführungsadapter) mittelbar geschleppt.

Die Einführung kann einen dem Hohlgehäuse in Schlepprichtung vorauslaufenden Einführungsadapter aufweisen, der am Verdrängersegment auf- und abwärts schwenkbar angelenkt ist und an dem die Einführung seitlich schwenkbar angelenkt ist. Durch diese Gestaltung verlängert sich der Abstand zwischen dem Schwert und der Einführung, es wird aber eine erhöhte Beweglichkeit gerade bei einer groß dimensionierten Verlegevorrichtung erreicht.

Der Einführungsadapter kann wie das Hohlgehäuse, z.B. als Schweißkonstruktion, hohlgehäuseartig ausgebildet sein und, in einer Seitenansicht gesehen, teilweise innerhalb des Verdrängersements liegen. Das Verdrängersegment kann den Einführungsadapter also schürzenartig umgreifen. Durch das schürzenartige Umgreifen des Verdrängersegments kann vermieden werden, dass Erdreich, insbesondere Sand oder Kies, zwischen das Verdrängersegment und den Einführungsadapter fällt und sich festsetzt, wodurch die Bewegbarkeit der einzelnen Teile eingeschränkt bzw. verhindert wird. Der Schwenkbereich des Einführungsadapters innerhalb des Verdrängersegments kann von einem Begrenzungselement, z.B. einem Stellzylinder, das zwischen dem Schwert und der Einführung angeordnet ist, begrenzt sein.

Die Einführung kann also über das Verdrängersegment bzw. das Verdrängersegment und den Einführungsadapter von dem Schwert mittelbar geschleppt werden.

Analog der Gestaltung der Einführung kann auch der Einführungsadapter aus einem sich in Vertikalrichtung der Verlegevorrichtung erstreckenden Rumpf und am Fußende beidseits des Rumpfs seitlich auskragenden Flossen, in Schlepprichtung gesehen, umgekehrt T-förmig ausgebildet sein. Die Flossen können sich, in einer Draufsicht gesehen, in Schlepprichtung verjüngen und/oder jeweils eine Vielzahl von Flossenelementen aufweisen, die, in einer Draufsicht gesehen, in Schlepprichtung treppenförmig gestaffelt angeordnet sind. In diesem Fall kann jedes Flossenelement eine, in einer Seitenansicht gesehen, spitz nach unten zulaufende Schneide aufweisen.

Des Weiteren kann der Einführungsadapter relativ zum Schwert so angeordnet sein, dass eine Fußsohle des Einführungsadapters auf gleicher Höhe wie eine Fußsohle des Schwerts läuft. Idealerweise laufen die Fußsohlen des Schwerts, des Einführungsadapters und der Einführung alle auf gleicher Höhe.

Die Verlegevorrichtung kann des Weiteren einen an einem Fuß des Schwertes, vorzugsweise auf- und abwärts schwenkbar angelenkten Schwertschuh aufweisen etwa nach dem Vorbild der in der DE 10115456 B4 angegebenen Verlegevorrichtung. Über den auf- und abwärts schwenkbaren Schwertschuh kann die Eindringtiefe der Verlegevorrichtung beeinflusst oder korrigiert werden.

Wenn der Schwertschuh einen Rumpf als einen zentralen Abschnitts des Schwerts beidseitig umgreift, kann er wie die Flossen der Einführung bzw. des Einführungsadapters dazu herangezogen werden, einen durch den Rumpf des Schwerts erzeugten vertikalen Schlitz umgekehrt T-förmig zu erweitern. Hierzu kann sich der Schwertschuh, in einer Draufsicht gesehen, analog der Einführung oder des Einführungsadapters in Schlepprichtung verjüngende Schneiden aufweisen. Insbesondere kann auch der Schwertschuh eine Vielzahl von Flossenelementen aufweisen, die, in einer Draufsicht gesehen, in Schlepprichtung gestaffelt angeordnet sind, wobei vorteilhaft jedes Flossenelement eine, in einer Seitenansicht gesehen, spitz nach unten zulaufende Schneide aufweisen kann.

Im Folgenden wird mit Hilfe der Zeichnungen eine bevorzugte Ausführungsform einer erfindungsgemäßen Verlegevorrichtung beschrieben, wobei die
Fig. 1 eine Seitenansicht eines Verlegesystems mit einer erfindungsgemäßen Verlegevorrichtung in einer Arbeitsstellung zeigt, in der die Verlegevorichtung zur Erdverlegung von drei Strangmaterialien in das Erdreich eingedrungen ist;
Fig. 2 eine Seitenansicht der erfindungsgemäßen Verlegevorrichtung in der Arbeitsstellung;
Fig. 3 eine Längsschnittansicht der erfindungsgemäßen Verlegevorrichtung in der Arbeitsstellung;
Fig. 4 eine Rückansicht der erfindungsgemäßen Verlegevorrichtung in der Arbeitsstellung;
Fig. 5 eine perspektivische Ansicht der erfindungsgemäßen Verlegevorrichtung mit der Angabe der Schwenkachsen der Komponenten der erfindungsgemäßen Verlegevorrichtung; und
Fig. 6 eine Draufsicht der erfindungsgemäßen Verlegevorrichtung.

### Bevorzugte Ausführungsform

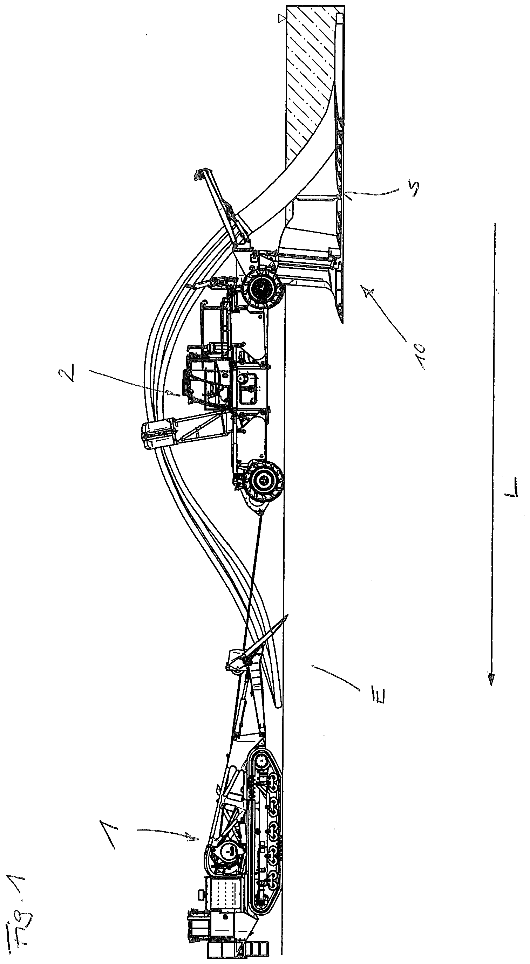

Die Fig. 1 zeigt eine Seitenansicht eines Verlegesystems mit einem Zugfahrzeug 1, einem vom Zugfahrzeug 1 über ein Zugseil gezogenes Trägerfahrzeug 2 und einer vom Trägerfahrzeug 2 getragenen und in Schlepprichtung L geschleppten Verlegevorrichtung 10.

Die Fig. 1 zeigt die Verlegevorrichtung 10 in ihrer Arbeitsstellung, in der die Verlegevorrichtung 10 in das Erdreich E versenkt ist.

In der Beschreibung und/oder in den Figuren verwendete Richtungsangaben, wie "Höhen- oder Vertikalrichtung" oder "vertikal", "horizontal", "auf- und abwärts", "seitlich" oder dergleichen beziehen sich auf einen Zustand, in dem sich die Verlegevorrichtung 10 in ihrer Arbeitsstellung befindet. In der Arbeitsstellung deckt sich die "Vertikalrichtung" oder die "Höhenrichtung" der Verlegevorrichtung 10 mit der Vertikalen auf die Erdoberfläche bzw. mit der Lotrichtung. Die "Längsrichtung" der Verlegevorrichtung 10 stimmt mit der Schlepprichtung überein.

### Verlegevorrichtung 10

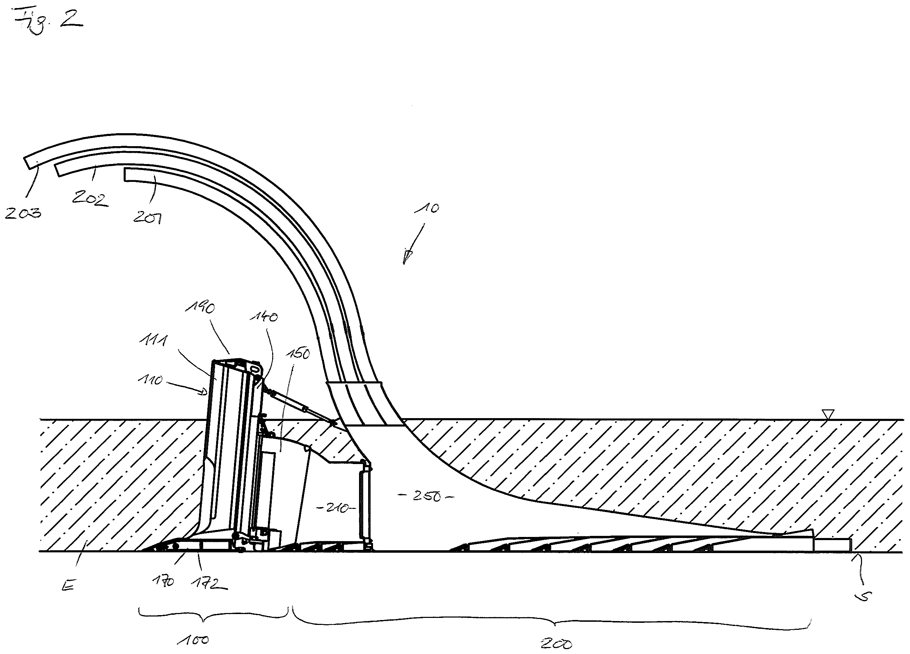

Die Fig. 2 bis Fig. 6 zeigen eine bevorzugte Ausführungsform der erfindungsgemäßen Verlegevorrichtung 10. In der gezeigten Ausführungsform weist die Verlegevorrichtung 10 - von vorne nach hinten gesehen - eine sich in Vertikalrichtung V der Verlegevorrichtung 10 erstreckende Verlegeschlitzausbildungseinrichtung 100 zum Ausbilden eines Verlegeschlitzes im Erdreich E und eine in Schlepp- oder Längsrichtung L der Verlegevorrichtung 10 der Verlegeschlitzausbildungseinrichtung 100 nachlaufende, geschleppte Einführung 200 zum Einführen dreier flexibler ersten Strangmaterialien 201, 202, 203, z.B. 150 kV-Hochspannungskabel, in den Verlegeschlitz auf. An die Einführung 200 kann sich eine (in den Figuren nicht gezeigte) weitere Einführung anschließen, über die beispielsweise Abdeckbändern, Warnbänder, Blitzschutzkabel oder dergleichen in einem vertikalen Abstand zu den Strangmaterialien 201 bis 203 verlegt werden.

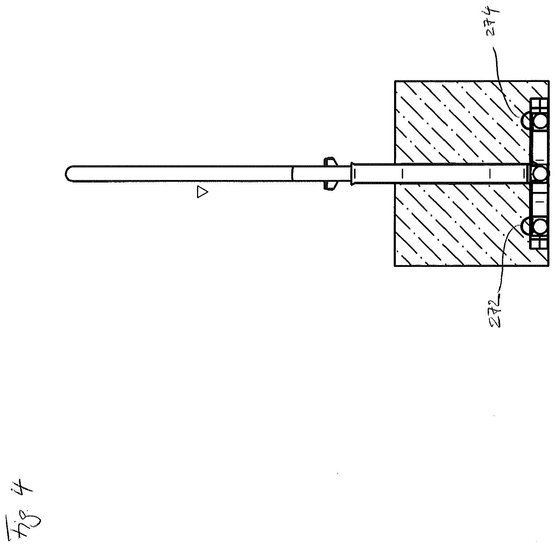

Wie die Fig. 2 und Fig. 4 zeigen, werden die Strangmaterialien 201 bis 203 auf der Sohle S des durch die Verlegeschlitzausbildungseinrichtung 100 ausgebildeten Verlegeschlitzes horizontal nebeneinander abgelegt.

### Verlegeschlitzausbildungseinrichtung 100

Die Verlegeschlitzausbildungseinrichtung 100 weist ein in Schlepprichtung L vorauslaufendes Schwert 110 und ein an der Rückseite des Schwertes 110 angehängtes Verdrängersegment 150 auf.

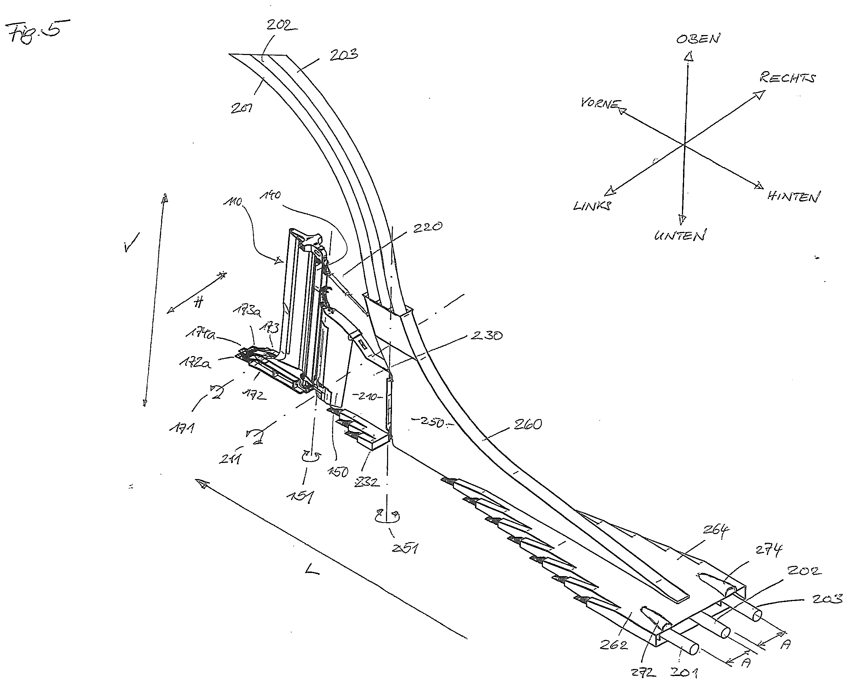

Das Schwert 110 ist nach dem Vorbild des in der DE 10115456 B4 angegebenen Schwerts aus einem Schwertkörper oder Rumpf 111, einer am Kopf des Rumpfs 111 befestigten Halterung 190, über die die Verlegevorrichtung 10 an dem in Fig. 1 gezeigten Trägerfahrzeug 2 gehalten wird, einem am Fuß des Rumps 111 um eine horizontale Achse 171 (vgl. Fig. 5) auf- und abwärts schwenkbar angelenkten Schwertschuh 170 und einer an der Rückseite des Rumpfs 111 gehaltenen Hohlprofilführung 140, in der ein (nicht detailliert gezeigter) Stellantrieb zur Schwenkbetätigung des Schwertschuhs 170 angeordnet ist, gebildet.

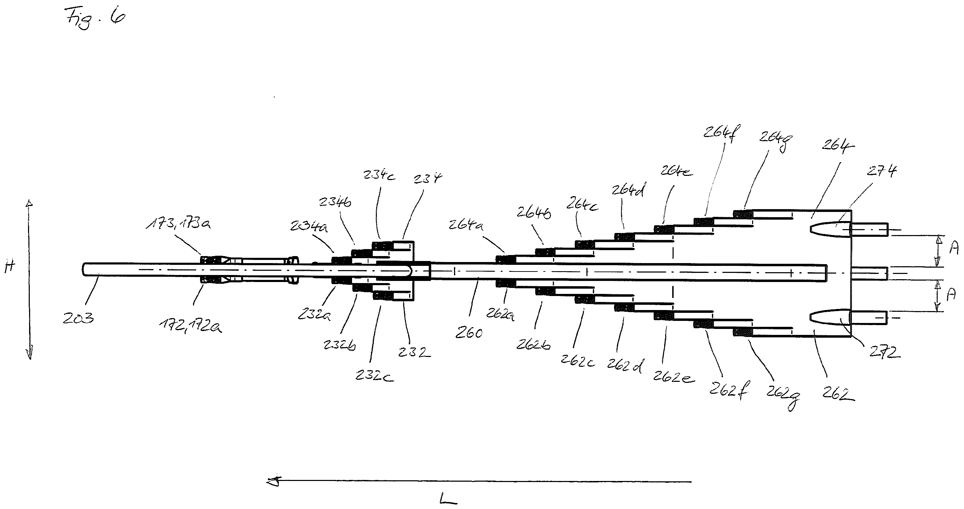

Über den auf- und abwärts schwenkbaren Schwertschuh 170 kann die Eindringtiefe der Verlegevorrichtung 10 in das Erdreich E beeinflusst oder korrigiert werden. Der Schwertschuh 170 weist, wie es in Fig. 5 und Fig. 6 gezeigt ist, beidseitig den Rumpf 111 umgreifende Flossen 172, 173, die aus jeweils einem Flossenelement 172a, 173a gebildet sind, sowie ein mittiges Flossenelement 174a auf. In der Draufsicht (vgl. Fig. 5, Fig. 6) gesehen, sind die Flossenelemente 172a, 173a, 174 des Schwertschuhs 170 in Schlepprichtung L verjüngend angeordnet und jeweils, in einer Seitenansicht gesehen, spitz nach unten zulaufend. Durch den Schwertschuh 170 erhält der durch das Schwert 110 erzeugte, sich vertikal in das Erdreich E erstreckende Verlegeschlitz bereits einen umgekehrt T-förmigen Querschnitt.

Das Verdrängersegment 150 ist nach dem Vorbild der in der DE 10115456 B4 angegebenen Verdrängervorrichtung als ein Schweißkörper ausgeführt und an der Rückseite der Hohlprofilführung 140 des Schwerts 110 um eine in etwa vertikale Schwenkachse 151 (vgl. Fig. 5) seitlich schwenkbar angelenkt. Das Verdrängersegment 150 hat die Funktion, den durch das Schwert 110 erzeugten Verlegeschlitz im Bereich oberhalb des Schwertschuhs 170 seitlich zu verbreitern und einen Zwischenraum zwischen dem Schwert 110 und der Einführung 200 zu überbrücken.

### Einführung 200

Die Einführung 200 ist in der gezeigten Ausführungsform aus einem in Schlepprichtung vorauslaufenden Einführungsadapter 210 und einem nachlaufenden Hohlgehäuse 250 gebildet.

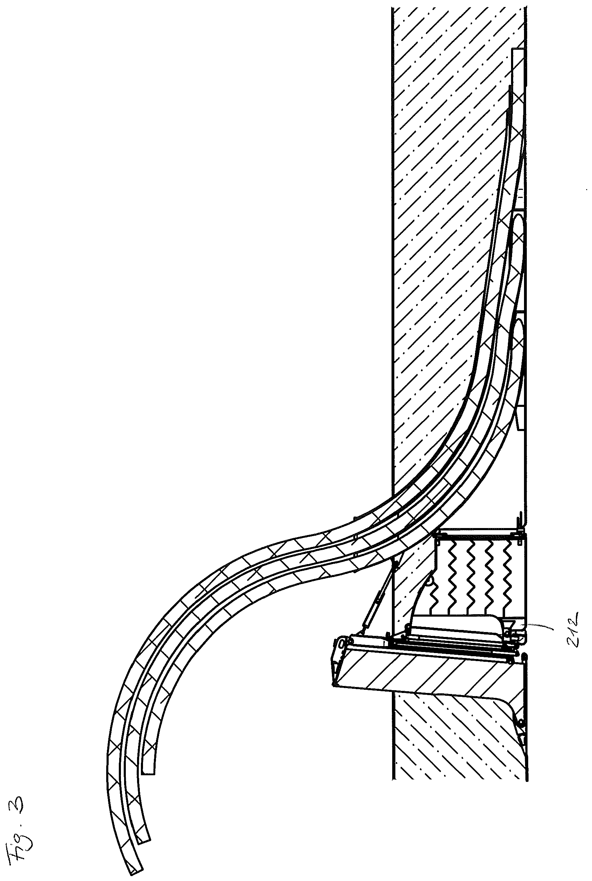

Der Einführungsadapter 210 ist als eine Schweißkonstruktion ausgebildet und wird von dem vorauslaufenden Verdrängersegment 150 schürzenartig umgriffen. Durch das schürzenartige Umgreifen des Verdrängersegments kann vermieden werden, dass Erde, insbesondere Sand oder Kies, zwischen das Verdrängersegment 150 und den Einführungsadapter 210 fällt und sich festsetzt, wodurch die Bewegbarkeit der einzelnen Teile eingeschränkt bzw. verhindert wird. Der Einführungsadapter 210 ist an einem in Schlepprichtung ragenden Bugabschnitt 212 (vgl. Fig. 3) an dem Verdrängersegment 150 um eine horizontale Schwenkachse 211 auf- und abwärts schwenkbar angelenkt. Der Schwenkbereich des Einführungsadapters 210 kann durch einen in Fig. 5 gezeigten Stellzylinder 220, der zwischen dem Schwert 110, im Besonderen der an der Rückseite des Schwerts 110 angeordneten Hohlprofilführung 140, und dem Hohlgehäuse 250 der Einführung angeordnet ist, geregelt oder begrenzt werden und zwar im Besonderen so, dass ein vorderer Abschnitt des Einführungsadapters 210 in jeder Schwenklage von dem Verdrängersegment 150 schürzenartig umgriffen wird. In der Arbeitsstellung der Verlegevorrichtung 10 kann der Stellzylinder 220 funktionslos geschaltet sein, um eine ungehinderte Schwenkbeweglichkeit der ersten Einführung 200 gegenüber dem Schwert 110 zu gewährleisten. In der Arbeitsstellung wird durch die auf die einzelnen Komponenten der Verlegevorrichtung 10 wirkenden Vertikalkräfte die Schwenkbeweglichkeit der der ersten Einführung 200 gegenüber dem Schwert 110 begrenzt, so dass die Funktion des Stellzylinders 220 in der Arbeitsstellung nicht benötigt wird.

Der Einführungsadapter 210 ist, wie es in Fig. 2 und Fig. 3 gezeigt ist, relativ zum Schwert 110 so angeordnet, dass seine Unterseite oder Fußsohle im Wesentlichen auf gleicher Höhe wie eine Unterseite oder Fußsohle des Schwerts 110 läuft. Dadurch wird eine Glättung eines von dem Einführungsadapter 210 überstrichenen Teils der Sohle des durch das Schwert 110 erzeugten Verlegeschlitzes erreicht.

Des Weiteren weist der Einführungsadapter 210, wie das später beschriebene Hohlgehäuse 250, einen sich in Vertikalrichtung V der Verlegevorrichtung erstreckenden Rumpf 230 und am Fußende beidseits des Rumpfs 230 seitlich auskragende Flossen 232, 234 auf, so dass er, in Schlepprichtung gesehen, umgekehrt T-förmig ausgebildet ist.

Die Flossen 232, 234 sind, in einer Draufsicht gesehen (vgl. Fig. 5, Fig. 6), in Schlepprichtung L verjüngend angeordnet und weisen jeweils eine Vielzahl von Flossenelementen 232a bis 232c, 234a bis 234c auf, die, in einer Draufsicht gesehen, in Schlepprichtung L treppenförmig gestaffelt angeordnet sind. Diese Gestaltung bietet die Möglichkeit, die Flossenelemente 232a bis 232c, 234a bis 234c beispielsweise austauschbar an den Vorderseiten der Flossen 232, 234 anzubringen, um sie beispielsweise im Verschleißfall austauschen zu können. Jedes der Flossenelemente 232a bis 232c, 234a bis 234c weist eine, in einer Seitenansicht (vgl. Fig. 2, Fig. 5) gesehen, spitz nach unten zulaufende Schneide auf.

Der Einführungsadapter 210 ist relativ zum Schwert 110 so angeordnet, dass seine Unterseite bzw. Fußsohle auf gleicher Höhe wie eine Unterseite bzw. Fußsohle des Schwerts 110 läuft.

Das Hohlgehäuse 250 der Einführung ist in der gezeigten Ausführungsform, wie der Einführungsadapter, als eine Schweißkonstruktion ausgebildet. Das Hohlgehäuse 250 ist an dem Einführungsadapter 210 um eine gegenüber der Vertikalen leicht schrägliegende Schwenkachse 251 seitlich schwenkbar angelenkt. Diese Schwenkachse 251 trägt dazu bei, die Schwenkbeweglichkeit der ersten Einführung 200 zu erhöhen.

Wie man in Fig. 4, Fig. 5 und Fig. 6 erkennen kann, ist der seitliche Umriss des Hohlgehäuses 250 der ersten Einführung 200, in Schlepprichtung gesehen, umgekehrt T-förmig. Das Hohlgehäuse 250 lässt sich im Besonderen in einen sich in Vertikalrichtung V der Verlegevorrichtung 10 erstreckenden Rumpf 260 und am Fußende beidseits des Rumpfs 260 seitlich auskragende Flossen 262, 264 unterteilen (vgl. Fig. 5, Fig. 6). Der Rumpf 260 hat eine Breite, die im Wesentlichen der Breite des vorauslaufenden Einführungsadapters 210 entspricht, so dass er innerhalb der durch das Verdrängersegment 150 bestimmten Breite des Verlegeschlitzes läuft. Der Rumpf 260 bildet einen zentralen Abschnitt der Einführung 200.

In der gezeigten Ausführungsform (vgl. Fig. 2, Fig. 4, Fig. 5) sind drei, jeweils zwischen einer Eintrittsöffnung vorne oben am Rumpf 260 des Hohlgehäuses 250 und einer Austrittsöffnung hinten unten am Rumpf 260 bzw. im Bereich der Flossen 262, 264 des Hohlgehäuses 250 bogenförmig verlaufende Führungsschächte (vgl. Fig. 3) ausgebildet. Die Führungsschächte verlaufen voneinander getrennt zwischen den Eintrittsöffnungen und Austrittsöffnungen. Die Bogenform des Führungsschachts ist dabei so gewählt werden, dass ein minimal zulässiger Biegeradius der Strangmaterialien 201 bis 203, beispielsweise das 20- bis 25-fache des Durchmessers der Strangmaterialien, nicht unterschritten wird.

Wie es in Fig. 5 gezeigt ist, sind die Eintrittsöffnungen der drei Führungsschächte in Schlepprichtung L hintereinander und die Austrittsöffnungen der drei Führungsschächte horizontal oder seitlich nebeneinander bezüglich einer Längsmittelebene des Hohlgehäuses 250 (vgl. Fig. 3) symmetrisch angeordnet. Dadurch können die drei Strangmaterialien 201 bis 203 in Schlepprichtung der Verlegevorrichtung 10 hintereinander in den Rumpf 260 des Hohlgehäuses 250 der ersten Einführung 200 eintreten und horizontal beabstandet im Rumpf 260 bzw. an den beiden Flossen 262, 264 des Hohlgehäuses 250 der Einführung 200 austreten und auf der durch die umgekehrte T-Form des Hohlgehäuses 250 der ersten Einführung 200 horizontal verbreiterten Sohle des Verlegeschlitzes abgelegt werden. In der gezeigten Ausführungsform betragen die Verlegeabstände A (vgl. Fig. 5) zwischen nebeneinanderliegenden Strangmaterialien beispielsweise 0,9 m.

Bei großen Abständen zwischen zwei nebeneinanderliegenden Strangmaterialien, z.B. den oben erwähnten 0,9 m, kann der erforderliche horizontale Verlegeschlitz, in dem die Strangmaterialien zu verlegen sind, nicht mehr ausschließlich durch eine seitliche Verdrängung des an den durch das Schwert erzeugten vertikalen Verlegeschlitz angrenzenden Erdreichs erzeugt werden. Daher sind die Flossen 262, 264 erfindungsgemäß so ausgebildet, dass sie horizontal in das Erdreich schneiden. Durch das beim Schleppen der Verlegevorrichtung an den Flossen vorbeistreichende Erdreich erfährt die Einführung eine nach unten gerichtete Reaktionskraft, die dazu beiträgt, die Einführung in der Tiefe der Arbeitsstellung zu halten.

In einer Draufsicht gesehen, sind die Flossen 262, 264 in Schlepprichtung L verjüngend ausgebildet. Des Weiteren weisen die Flossen 262, 264 jeweils eine Vielzahl von Flossenelementen 262a bis 262g, 264a bis 264g auf, die in einer Draufsicht gesehen, treppenförmig gestaffelt angeordnet sind. Diese Gestaltung bietet die Möglichkeit, die Flossenelemente 262a bis 262g, 264a bis 264g beispielsweise austauschbar an den Vorderseiten der Flossen 262, 264 anzubringen, um sie beispielsweise im Verschleißfall austauschen zu können. Jedes de Flossenelemente 262a bis 262g, 264a bis 264g hat eine, in einer Seitenansicht (vgl. Fig. 2, Fig. 5) der Verlegevorrichtung 10 gesehen, spitz nach vorne unten zulaufende Schneide.

Die Einführung 200 ist relativ zur Verlegeschlitzausbildungseinrichtung 100 bzw. zum Schwert 110 in Vertikalrichtung V der Verlegevorrichtung 10 so angeordnet, dass eine Fußsohle der Einführung 200 auf gleicher Höhe wie eine Fußsohle des Schwerts 110 läuft (vgl. Fig. 2). Die Fußsohle der Einführung 200 kann auf der durch das Schwert 110, im Besonderen des Schwertschuhs 170, erzeugten Sohle S des Verlegeschlitzes laufen, wodurch die Sohle S des Verlegeschlitzes geglättet wird und die aus den Austrittsöffnungen austretenden Strangmaterialien 201 bis 203 im Wesentlichen unmittelbar auf der Sohle S des Verlegeschlitzes abgelegt werden können. Die Fußsohlen bilden daher Gleit- oder Streichflächen zur Glättung der Sohle S des Verlegeschlitzes.

Insgesamt kann durch das Schwert 110 und die Einführung 200 ein, in Schlepprichtung der Verlegevorrichtung 10 bzw. in Längenerstreckungsrichtung des Verlegeschlitzes gesehen, umgekehrt T-förmiger Verlegeschlitz erzeugt werden.

In den Fig. 4, Fig. 5 und Fig. 6 sind mit den Bezugszeichen 272, 274 zwei haubenförmige Vorsprünge gezeigt, die sich unmittelbar über der linken bzw. rechten Austrittsöffnung der Einführung 200 befinden. Diese Vorsprünge haben die Funktion, Steine, Erdklumpe, Geröll, etc. von den Austrittsöffnungen bzw. den aus den Austrittsöffnungen austretenden Strangmaterialien 201, 203 zu verdrängen. Für die mittige Austrittsöffnung wird dieselbe Funktion bereits durch den Rumpf 260 erreicht. Die Strangmaterialien 201, 202, 203 können daher mit einem seitlichen Spiel verlegt werden, das sich im Laufe der Zeit durch mit Regenwasser eingeschlämmten Feinteilchen füllt. Das Risiko für eine Beschädigung der Strangmaterialien 201, 202, 203 durch größere Steine etc. kann daher gering gehalten werden.

## Patentansprüche

1. Verlegevorrichtung (10) zur Erdverlegung flexibler Strangmaterialien, mit:
einer sich in Vertikalrichtung (V) der Verlegevorrichtung (10) erstreckenden Verlegeschlitzausbildungseinrichtung (100) zum Ausbilden eines Verlegeschlitzes im Erdreich,
einer in Längsrichtung (L) der Verlegevorrichtung (10) der Verlegeschlitzausbildungseinrichtung (100) nachlaufenden, geschleppten Einführung (200) zum Einführen mehrerer flexibler Strangmaterialien (201 bis 203) in den Verlegeschlitz, mit einem Hohlgehäuse (250), das zur Führung der Strangmaterialien (201 bis 203) mehrere Führungsschächte, vorzugsweise eine der Zahl der zu verlegenden Strangmaterialien entsprechende Zahl von Führungsschächten, aufweist, die jeweils zwischen einer Eintrittsöffnung am Kopfende der Einführung (200) und einer Austrittsöffnung am Fußende der Einführung (200) voneinander getrennt bogenförmig verlaufen,
**dadurch gekennzeichnet, dass**
das Hohlgehäuse (250), in Schlepprichtung (L) gesehen, umgekehrt T-förmig dergestalt ausgebildet ist, dass die Austrittsöffnungen der Führungsschächte horizontal nebeneinander in definierten Abständen (A) angeordnet sind.

2. Verlegevorrichtung (10) nach Anspruch 1, **dadurch gekennzeichnet, dass** die Eintrittsöffnungen der Führungsschächte, in Schlepprichtung gesehen, hintereinander angeordnet sind.

3. Verlegevorrichtung (10) nach Anspruch 1 oder 2, **dadurch gekennzeichnet, dass** das Hohlgehäuse (250) einen sich in Vertikalrichtung (V) erstreckenden Rumpf (260) und am Fußende beidseits des Rumpfs (260) seitlich auskragende Flossen (262, 264) aufweist.

4. Verlegevorrichtung (10) nach Anspruch 3, **dadurch gekennzeichnet, dass** sich die Flossen (262, 264), in einer Draufsicht gesehen, in Schlepprichtung (L) verjüngen.

5. Verlegevorrichtung (10) nach Anspruch 4, **dadurch gekennzeichnet, dass** die Flossen (262, 264) jeweils eine Vielzahl von Flossenelementen (262a bis 262g, 264a bis 264g) aufweisen, die, in einer Draufsicht gesehen, treppenförmig gestaffelt angeordnet sind.

6. Verlegevorrichtung (10) nach Anspruch 5, **dadurch gekennzeichnet, dass** jedes Flossenelement (262a bis 262c, 264a bis 264c) eine, in einer Seitenansicht gesehen, spitz nach vorne unten zulaufende Schneide aufweist.

7. Verlegevorrichtung (10) nach einem der vorhergehenden Ansprüche, **dadurch gekennzeichnet, dass** die Verlegeschlitzausbildungseinrichtung (100) ein sich in Vertikalrichtung (V) erstreckendes Schwert (110) aufweist.

8. Verlegevorrichtung (10) nach Anspruch 7, **dadurch gekennzeichnet, dass** eine Fußsohle der Einführung (200) auf gleicher Höhe wie eine Fußsohle des Schwerts (110) läuft.

9. Verlegevorrichtung (10) nach Anspruch 7 oder 8, **dadurch gekennzeichnet, dass** die Einführung (200) relativ zum Schwert (110) seitlich schwenkbar ist.

10. Verlegevorrichtung (10) nach einem der Ansprüche 7 bis 9, **dadurch gekennzeichnet, dass** die Einführung (200) relativ zum Schwert (110) auf- und abwärts schwenkbar ist.

11. Verlegevorrichtung (10) nach einem der Ansprüche 7 bis 10, **dadurch gekennzeichnet, dass** die Verlegeschlitzausbildungseinrichtung (100) ein in Schlepprichtung (L) zwischen dem Schwert (110) und der Einführung (200) angeordnetes Verdrängersegment (150) zum Verbreitern des Verlegeschlitzes aufweist.

12. Verlegevorrichtung (10) nach einem Anspruch 11, **dadurch gekennzeichnet, dass** die Einführung (200) einen in Schlepprichtung (L) vorauslaufenden Einführungsadapter (210) aufweist, der am Verdrängersegment (150) auf- und abwärts schwenkbar angelenkt ist und an dem das Hohlgehäuse (250) der Einführung (200) seitlich schwenkbar angelenkt ist.

13. Verlegevorrichtung (10) nach Anspruch 12, **dadurch gekennzeichnet, dass** der Einführungsadapter (210) aus einem sich in Vertikalrichtung (V) erstreckenden Rumpf (230) und am Fußende beidseits des Rumpfs (230) seitlich auskragenden Flossen (232, 234), in Schlepprichtung (L) gesehen, umgekehrt T-förmig ausgebildet ist.

14. Verlegevorrichtung (10) nach Anspruch 13, **dadurch gekennzeichnet, dass** die Flossen (232, 234), in einer Draufsicht gesehen, in Schlepprichtung (L) verjüngend angeordnet sind.

15. Verlegevorrichtung (10) nach einem der Ansprüche 12 bis 14, **dadurch gekennzeichnet, dass** eine Fußsohle des Einführungsadapters (210) auf gleicher Höhe wie eine Fußsohle des Schwerts (110) läuft.

## Claims

1. Relocation device (10) for laying flexible strand material in the ground, with:
a laying slit formation apparatus (100) extending in vertical direction (V) of the relocation device (10) for forming a laying slit in the earth,
a towed insertion unit (200), trailing in longitudinal direction (L) of the relocation device (10) of the laying slit formation apparatus (100), for guiding several flexible strand materials (201 to 203) into the laying slit, with a hollow housing (250), which, in order to guide the strand materials (201 to 203), has several guide channels, preferably a number of guide channels corresponding to the number of strand materials to be laid, said guide channels each running separate from one another in an arc pattern between an entry opening at the top end of the insertion unit (200) and an exit opening at the bottom end of the insertion unit (200),
**characterised in that**
the hollow housing (250), viewed in towing direction (L), is formed in an inverted-T pattern in such a way that the exit openings of the guide channels are arranged horizontally side by side at defined intervals (A).

2. Relocation device (10) according to claim 1, **characterised in that** the entry openings of the guide channels, viewed in towing direction, are arranged one behind the other.

3. Relocation device (10) according to claim 1 or 2, **characterised in that** the hollow housing (250) has a body (260) extending in vertical direction (V) and, at the bottom end on both sides of the body (260), laterally protruding fins (262, 264).

4. Relocation device (10) according to claim 3, **characterised in that** the fins (262, 264), viewed in a top view, taper in towing direction (L).

5. Relocation device (10) according to claim 4, **characterised in that** the fins (262, 264) each have a plurality of fin elements (262a to 262g, 264a to 264g), which, viewed in a top view, are arranged in a staggered step pattern.

6. Relocation device (10) according to claim 5, **characterised in that** each fin element (262a to 262c, 264a to 264c) has a cutter, which, viewed in a side view, runs down to a point at the front.

7. Relocation device (10) according to any one of the preceding claims, **characterised in that** the laying slit formation apparatus (100) has a blade (110) extending in vertical direction (V).

8. Relocation device (10) according to claim 7, **characterised in that** a base of the insertion unit (200) runs at the same height as a base of the blade (110).

9. Relocation device (10) according to claim 7 or 8, **characterised in that** the insertion unit (200) is laterally pivotable relative to the blade (110).

10. Relocation device (10) according to any one of claims 7 to 9, **characterised in that** the insertion unit (200) is pivotable upwards and downwards relative to the blade (110).

11. Relocation device (10) according to any one of claims 7 to 10, **characterised in that** the laying slit formation apparatus (100) has a displacer segment (150) arranged in towing direction (L) between the blade (110) and the insertion unit (200), to widen the laying slit.

12. Relocation device (10) according to a claim 11, **characterised in that** the insertion unit (200) has an insertion adapter (210) preceding in towing direction (L), which is hinged in an upwardly and downwardly pivotable way on the displacer segment (150) and on which the hollow housing (250) of the insertion unit (200) is hinged in a laterally pivotable way.

13. Relocation device (10) according to claim 12, **characterised in that** the insertion adapter (210) is formed, in an inverted-T pattern, of a body (230) extending in vertical direction (V) and, at the bottom end on both sides of the body (230), laterally protruding fins (232, 234), viewed in towing direction (L).

14. Relocation device (10) according to claim 13, **characterised in that** the fins (232, 234), viewed in a top view, are arranged tapering in towing direction (L).

15. Relocation device (10) according to any one of claims 12 to 14, **characterised in that** a base of the insertion adapter (210) runs at the same height as a base of the blade (110).

## Revendications

1. Dispositif de pose (10) pour la pose en terre de matériaux filiformes flexibles, avec :
un appareil de formation de canal de pose (100) s'étendant dans la direction verticale (V) du dispositif de pose (10) pour former un canal de pose dans la terre,
une unité d'introduction (200) remorquée à l'arrière dans la direction longitudinale (L) du dispositif de pose (10) de l'appareil de formation de canal de pose (100), pour introduire plusieurs matériaux filiformes flexibles (201 à 203) dans le canal de pose, avec un logement creux (250) qui présente plusieurs tiges de guidage pour guider les matériaux filiformes (201 à 203), de préférence un nombre de tiges de guidage correspondant au nombre des matériaux filiformes à poser, qui s'étendent respectivement en forme d'arcs séparés les uns des autres respectivement entre une ouverture d'entrée à l'extrémité de tête de l'unité d'introduction (200) et une ouverture de sortie à l'extrémité de queue de l'unité d'introduction (200) ;
**caractérisé en ce que**
le logement creux (250), vu dans la direction de remorquage (L), est réalisé en forme de T inversé, de sorte que les ouvertures de sortie des tiges de guidage soient agencées horizontalement les unes à côté des autres à des intervalles définis (A).

2. Dispositif de pose (10) selon la revendication 1, **caractérisé en ce que** les ouvertures d'entrée des tiges de guidage, dans une vue dans la direction de remorquage, sont agencées les unes derrière les autres.

3. Dispositif de pose (10) selon la revendication 1 ou 2, **caractérisé en ce que** le logement creux (250) présente une coque (260) s'étendant dans une direction verticale (V) et présente des ailettes (262, 264) faisant saillie latéralement au niveau de l'extrémité de queue des deux côtés de la coque (260).

4. Dispositif de pose (10) selon la revendication 3, **caractérisé en ce que** les ailettes (262, 264), dans une vue en plan, sont effilées dans la direction de remorquage (L).

5. Dispositif de pose (10) selon la revendication 4, **caractérisé en ce que** les ailettes (262, 264) présentent chacune une pluralité d'éléments d'ailette (262a à 262g, 264a à 264g) qui, dans une vue en plan, sont agencés décalés en forme d'escalier.

6. Dispositif de pose (10) selon la revendication 5, **caractérisé en ce que** chaque élément d'ailette (262a à 262c, 264a à 264c) présente, dans une vue de côté, une coupe pointue vers le bas et vers l'avant.

7. Dispositif de pose (10) selon l'une des revendications précédentes, **caractérisé en ce que** l'appareil de formation de canal de pose (100) présente une lame (110) s'étendant dans la direction verticale (V).

8. Dispositif de pose (10) selon la revendication 7, **caractérisé en ce qu'**une semelle de l'unité d'introduction (200) s'étend à la même hauteur qu'une semelle de lame (110).

9. Dispositif de pose (10) selon la revendication 7 ou 8, **caractérisé en ce que** l'unité d'introduction (200) peut pivoter latéralement par rapport à la lame (110).

10. Dispositif de pose (10) selon l'une des revendications 7 à 9, **caractérisé en ce que** l'unité d'introduction (200) peut pivoter vers le haut et vers le bas par rapport à la lame (110).

11. Dispositif de pose (10) selon l'une quelconque des revendications 7 à 10, **caractérisé en ce que** l'appareil de formation de canal de pose (100) présente un segment de refoulement (150) agencé dans la direction de remorquage (L) entre la lame (110) et l'unité d'introduction (200) pour élargir le canal de pose.

12. Dispositif de pose (10) selon la revendication 11, **caractérisé en ce que** l'unité d'introduction (200) présente un adaptateur d'unité d'introduction (210) tourné vers l'avant dans la direction de remorquage (L), qui est articulé pouvant pivoter vers le haut et vers le bas sur le segment de refoulement (150), et sur lequel le logement creux (250) de l'unité d'introduction (200) est articulé pouvant pivoter latéralement.

13. Dispositif de pose (10) selon la revendication 12, **caractérisé en ce que** l'adaptateur d'unité d'introduction (210) est réalisé en forme de T inversé, dans une vue dans la direction de remorquage (L), à partir d'une coque (230) s'étendant dans la direction verticale (V) et d'ailettes (232, 234) faisant saillie latéralement des deux côtés de la coque (230) au niveau de l'extrémité de queue.

14. Dispositif de pose (10) selon la revendication 13, **caractérisé en ce que** les ailettes (232, 234), dans une vue en plan, sont agencées effilées dans la direction de remorquage (L).

15. Dispositif de pose (10) selon l'une quelconque des revendications 12 à 14, **caractérisé en ce qu'**une semelle de l'adaptateur d'unité d'introduction (210) s'étend à la même hauteur qu'une semelle de la lame (110).
